# EUROPEAN PATENT SPECIFICATION

(11) **EP 0 754 570 B1**
(45) Date of publication and mention of the grant of the patent: **22.03.2000**
(21) Application number: 96109704.5
(22) Date of filing: 17.06.1996
(51) Int. Cl.: B60B 1/08

(54) **Cast wheel**
Formgegossenes Rad
Roue coulée

(30) Priority: 18.07.1995 JP 18123095
(43) Date of publication of application: 22.01.1997
(73) Proprietor: HONDA GIKEN KOGYO KABUSHIKI KAISHA, Minato-ku Tokyo (JP)
(72) Inventor: Okazaki, Yasunori, Wako-shi, Saitama (JP)
(74) Representative: Liska, Horst, Dr.-Ing.

(56) References cited:
- US-A- 3 910 638
- US-A- 4 760 718
- PATENT ABSTRACTS OF JAPAN vol. 10, no. 267 (M-516), 11 September 1986 & JP-A-61 092754 (YAMAHA MOTOR CO.), 10 May 1986,
- PATENT ABSTRACTS OF JAPAN vol. 11, no. 98 (M-575), 27 March 1987 & JP-A-61 247501 (HONDA MOTOR CO.), 4 November 1986,
- PATENT ABSTRACTS OF JAPAN vol. 11, no. 321 (M-633), 20 October 1987 & JP-A-62 103201 (YAMAHA MOTOR CO.), 13 May 1987,

## Description

The present invention relates to a cast wheel including a hub, a rim coaxially surrounding the hub, and a plurality of spokes arranged between the hub and the rim, wherein the hub, rim and spokes are integrally formed.

Cast wheels of this type have been disclosed, for example, in Japanese Utility Model Publication No. Hei 4-51041, and in Patent Abstracts of Japan, vol. 11, no. 98 (M-575). The cast wheel shown in the latter document is provided with spokes having substantially an U-shaped cross-section.

In the above-described cast wheels, since spokes are arranged in equal intervals along the circumferential direction of a hub and a rim, each interval between the spokes is relatively small and in some cases, it is difficult for a hand to enter the interval upon maintenance of a disk brake or the like. Such a disadvantage is made significant for a vehicle having small wheels such as a scooter.

US-A-4,760,718 discloses a cast wheel according to the preamble of claim 1.

In view of the foregoing, the present invention has been made, and an object of the present invention is to provide a lightweight cast wheel maintaining a relatively large opening portion between a hub and a rim for making easy maintenance of a disk brake or the like while increasing or keeping a rigidity of the wheel.

To achieve the above object, according to the invention, there is provided a cast wheel as described in claim 1.

According to the invention described in claim 1, consequently a relative large opening portion can be ensured between the hub and the rim. This makes it possible to increase the maintenance performance for a disk brake and the like mounted on the wheel while sufficiently keeping the rigidity of the wheel. In particular the spokes are arranged in a triangular shape resulting in the increased rigidity of the wheel.

According to the invention described in claim 2, in addition to the configuration of the invention described in claim 1, each of the spoke pairs are disposed between the hub and the rim in such a manner that an interval between the spokes forming the spoke pair is made smaller as nearing the hub.

Hereinafter, one embodiment of the present invention will be described with reference to the accompanying drawings.

Fig. 1: A side view of a motor-bicycle using the cast wheels of the present invention as front and rear wheels.

Fig. 2: A side view of the cast wheel of the present invention applied to a front wheel.

Fig. 3: A sectional view taken on line 3-3 of Fig. 2.

Fig. 4: A sectional view taken on line 4-4 of Fig. 2.

Fig. 5: A side view of a cast wheel of the present invention applied to a rear wheel.

Fig. 6: A sectional view taken on line 6-6 of Fig. 5.

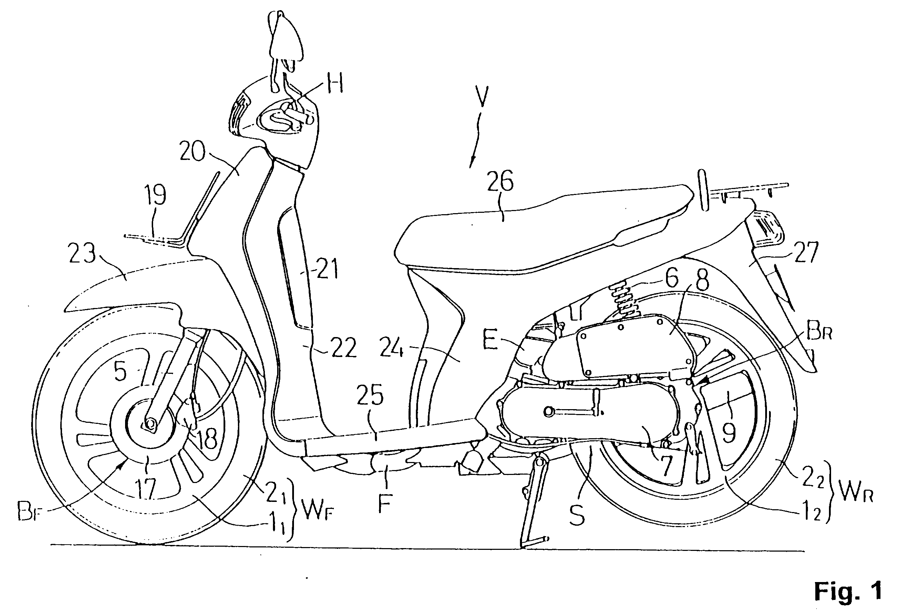

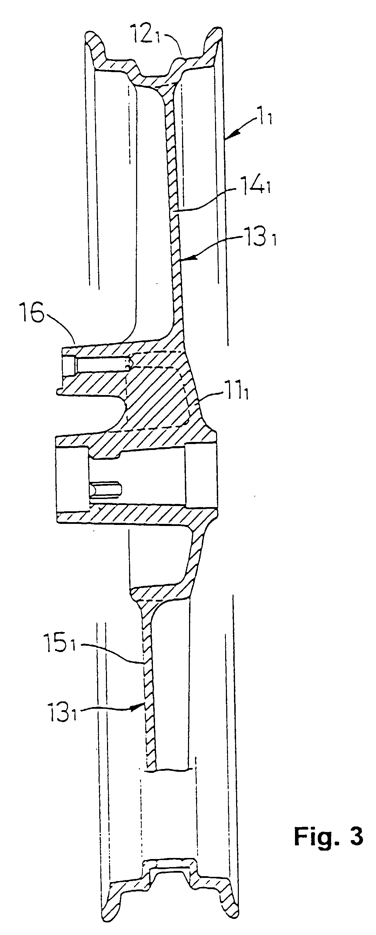

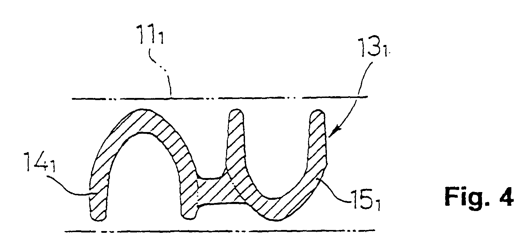

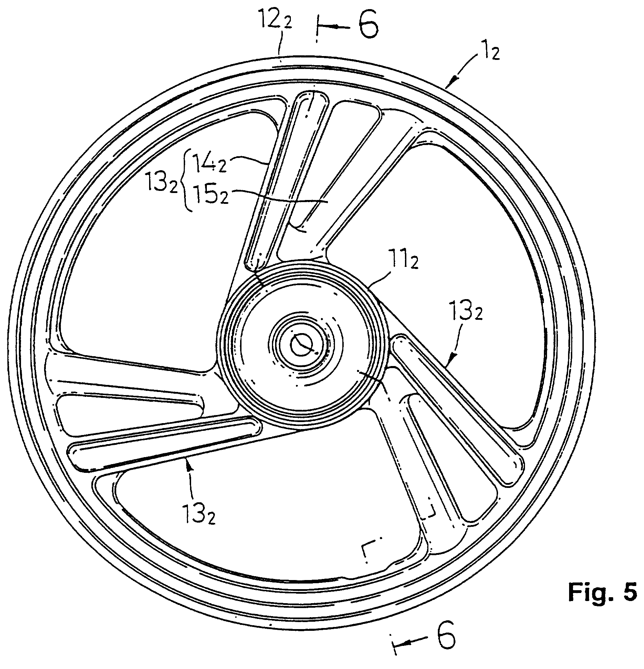

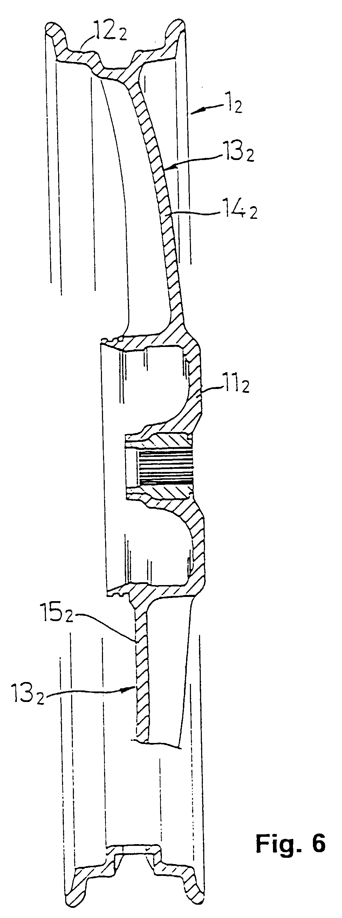

Figs. 1 to 6 show one embodiment of the present invention.

Referring first to Fig. 1, the front portion of a body frame F of a scooter type motor-bicycle V is covered with a front portion 20 of a front cover which has a front carrier 19 and a rear portion 22 of the front cover which has a front inner rack 21. A front fork 5 is rotatably supported on the front end portion of the body frame F in such a manner as to be turnable right and left by a steering handle H. A front wheel W_{F} including a cast wheel 1₁ and a tire 2₁ mounted around the outer periphery of the cast wheel 1₁ is covered with a movable front fender 23 and is rotably supported by the lower end of the front fork 5. A disk brake B_{F} having a brake disk 17 and a caliper 18 is mounted on the front wheel W_{F}.

The rear portion of the body frame F is covered with a rear cover 24, and a seat 26 for allowing a driver putting his feet on a step 25 to sit thereon is provided on the upper portion of the rear cover 24. A swing unit S including an engine E and a mission case 7 is vertically rockably supported on the rear portion of the body frame F. A pair of right and left cushions are provided between the swing unit S and the body frame F. A rear wheel WR including a cast wheel 1₂ and a tire 2₂ mounted around the outer periphery of the cast wheel 1₂ is covered with a rear fender 27 extending rearward from the rear cover 24, and it is rotatably supported by the mission case 7. A drum brake B_{R} is mounted on the rear wheel W_{R}. An air cleaner 8 is disposed on the upper portion of the mission case 7 on the left side from the rear wheel W_{R}. A muffler 9 is disposed on the right side from the rear wheel W_{R}.

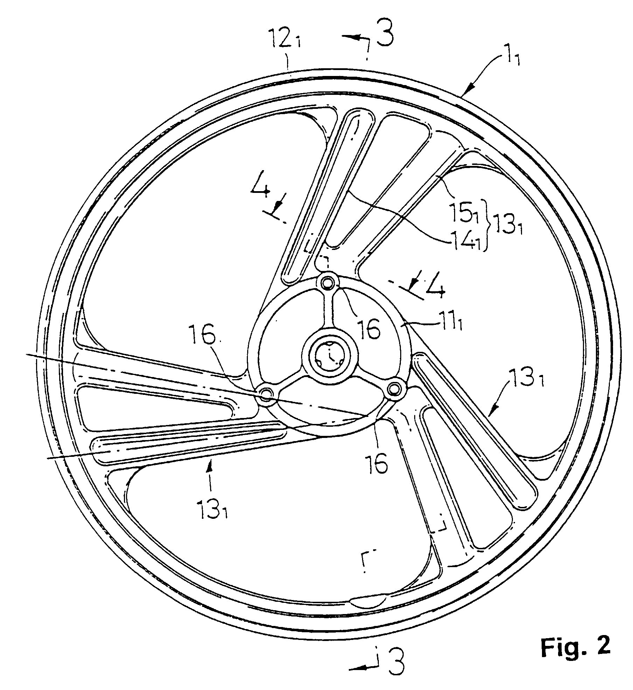

Next, the cast wheel 1₁ of the front wheel W_{F} will be described with reference to Figs. 2 to 4. The cast wheel 1₁ includes a hub 11₁ rotatably supported by the lower end of the front fork 5, a rim 12₁ coaxially surrounding the hub 11₁ and mounting the tire 2₁, and a plurality (for example three pieces) of spoke pairs 13₁, ..., 13₁ provided between the hub 11₁ and the rim 12₁. The hub 11₁, the rim 12₁ and the spoke pairs 13₁, ..., 13₁ are integrally formed by casting of a light alloy such as an aluminum alloy. A plurality (for example three pieces) of mounting bosses 16,..., 16 for mounting the brake disk 17 (see Fig. 1) of the disk brake B_{F} are projectingly provided on the hub 11₁.

Each spoke pair 13₁ is composed of spokes 14₁, 15₁ which are close to each other along the circumferential direction of the hub 11₁ and the rim 12₁. One spoke 14₁ is formed substantially in a U-shaped in cross-section which is opened on the left side of the front wheel W_{F}. On the other hand, the other spoke 15₁ is formed substantially in a U-shaped in cross-section which is opened on the right side of the front wheel W_{F}. The spokes 14₁, 15₁ are arranged between the hub 11₁ and the rim 12₁ in such a manner that each of the spokes 14₁, 15₁ is inclined to one side in the circumferential direction with respect to the radial direction of the hub 11₁ and each interval between the spokes 14₁, 15₁ is made smaller as nearing the hub 11₁. In other words, the spokes 14₁, 15₁ are arranged substantially in a triangular shape.

The spoke pairs 13₁, ..., 13₁ are arranged at a plurality of points, for example, three points spaced at equal intervals along the circumferential direction of the hub 11₁ and the rim 12₁ in such a manner that each interval between the spoke pairs 13₁, ..., 13₁ is larger than each interval between the spokes 14₁, 15₁ forming each spoke pair 13₁.

Referring to Figs. 1, 5 and 6, the cast wheel 1₂ of the rear wheel W_{R} includes a hub 11₂ capable of containing the drum brake B_{R}, a rim 12₂ coaxially surrounding the hub 11₂ and mounting the tire 2₂, and a plurality (for example three pieces) of spoke pairs 13₂, ..., 13₂ provided between the hub 11₂ and the rim 12₂. The hub 11₂, the rim 12₂ and the spoke pairs 13₂, ..., 13₂ are integrally formed by casting of a light alloy such as an aluminum alloy. Each spoke pair 13₂ is composed of spokes 14₂, 15₂ which are close to each other along the circumferential direction of the hub 11₂ and 12₂. One spoke 14₂ is formed substantially in a U-shaped in cross-section which is opened on the left side of the rear wheel W_{R}. On the other hand, the other spoke 15₂ is formed substantially in a U-shaped in cross-section which is opened on the right side of the rear wheel W_{R}. The spokes 14₂, 15₂ are arranged between the hub 11₂ and the rim 12₂ in such a manner that each interval between the spokes 14₂, 15₂ is made smaller as nearing the hub 11₂.

The spoke pairs 13₂, ..., 13₂ are arranged at a plurality of points, for example, three points spaced at equal intervals along the circumferential direction of the hub 11₂ and the rim 12₂ in such a manner that each interval between the spoke pairs 13₂, ..., 13₂ is larger than each interval between the spokes 14₂, 15₂ forming each spoke pair 13₂.

The function of this embodiment will be described below. In the cast wheel (1₁, 1₂), a plurality of the spokes (14₁, 15₁; 14₂, 15₂) connecting the hub (11₁, 11₂) to the rim (12₁, 12₂) is constituted of a plurality of the spoke pairs (13₁, ...; 13₂, ...) each being composed of the spokes (14₁, 15₁; 14₂, 15₂) close to each other. The spoke pairs (13₁, ...; 13₂, ...) are arranged at equal intervals along the circumferential direction in such a manner that each interval between the spoke pairs (13₁, ...; 13₂, ...) is larger than each interval between the spokes (14₁, 15₁; 14₂, 15₂). Accordingly, it becomes possible to ensure each relatively large opening portion between the spoke pairs (13₁, ...; 13₂, ...) while keeping the rigidity of the wheel, and hence to make easy maintenance for a disk brake B_{F} and the drum brake B_{R}.

Since each of the spokes (14₁, 15₁; 14₂, 15₂) forming the spoke pairs (13₁, ...; 13₂, ...) is formed substantially in a U-shape which is opened on the left or right side of the wheel, the rigidity of the wheel can be increased while the weight of the wheel is reduced. Also, since the spokes (14₁, 15₁; 14₂, 15₂) are provided in a triangular shape between the hub (11₁; 11₂) and the rim (12₁; 12₂), the rigidity of the wheel can be increased.

While the embodiment of the present invention has been described in detail, the present invention is not limited thereto, and many changes in design are possible without departing from the scope of the claims.

For example, the number of the spoke pairs is not limited to three, and the spokes pairs may be provided at four points in the circumferential direction between a hub and a rim.

In summary it is an object to provide a cast wheel including a hub, a rim coaxially surrounding the hub, and a plurality of spokes connecting the hub to the rim, which are integrally formed, wherein a relatively large opening portion is ensured between the hub and the rim for improving the maintenance performance of a disk brake or the like while keeping the rigidity of the wheel.

It is provided a plurality of spoke pairs 13₁ composed of spokes 14₁, 15₁ being close to each other along the circumferential direction of a hub 11₁ and a rim 12₁ are arranged at equal intervals along the circumferential direction in such a manner that each interval between the spoke pairs 13₁ is larger than each interval between the spokes 14₁, 15₁.

## Claims

1. A cast wheel comprising a hub (11₁; 11₂), a rim (12₁; 12₂) coaxially surrounding said hub (11₁; 11₂), and a plurality of spoke pairs (13₁; 13₂) arranged between said hub (11₁; 11₂) and said rim (12₁; 12₂),
each spoke pair (13₁; 13₂) being composed of a pair of spokes (14₁, 15₁; 14₂, 15₂) close to each other in the circumferential direction of said hub (11₁; 11₂) and said rim (12₁; 12₂), said spoke pairs (13₁; 13₂) being arranged at equal intervals along said circumferential direction in such a manner that each interval between said spoke pairs (13₁; 13₂) is larger than each interval between said spokes (14₁, 15₁; 14₂, 15₂) forming said spoke pairs (13₁; 13₂),
said hub (11₁; 11₂), said rim (12₁; 12₂) and said spokes (14₁, 15₁; 14₂, 15₂) being integrally formed, characterized in that
one spoke (14₁; 14₂) of the pair of spokes (14₁, 15₁; 14₂, 15₂) is formed substantially in a U-shaped cross-section which is opened in one side of the wheel and the other spoke (15₁; 15₂) of the pair of spokes (14₁, 15₁; 14₂, 15₂) is formed substantially in a U-shaped cross-section which is opened in the other side of the wheel,
and in that each of said spokes (14₁, 15₁; 14₂, 15₂) is inclined to one side in the circumferential direction with respect to the radial direction of the hub (11₁; 11₂) in such a manner the spokes of each pair of spokes are arranged in a triangular shape.

2. A cast wheel according to claim 1, wherein said spokes (14₁, 15₁; 14₂, 15₂) forming each of said spoke pairs (13₁; 13₂) are disposed between said hub (11₁; 11₂) and said rim (12₁; 12₂) in such a manner that an interval between said spokes (14₁, 15₁; 14₂, 15₂) is made smaller as nearing said hub (11₁; 11₂).

## Patentansprüche

1. Gußrad, umfassend eine Nabe (11₁; 11₂), eine Felge (12₁; 12₂), welche die Nabe (11₁; 11₂) koaxial umgibt, und eine Mehrzahl von Speichenpaaren (13₁; 13₂), die zwischen der Nabe (11₁; 11₂) und der Felge (12₁; 12₂) angeordnet sind,
wobei jedes Speichenpaar (13₁; 13₂) aus einem Paar von in Umfangsrichtung der Nabe (11₁; 11₂) und der Felge (12₁; 12₂) einander nahen Speichen (14₁, 15₁; 14₂, 15₂) zusammengesetzt ist, wobei die Speichenpaare (13₁; 13₂) in gleichen Abständen längs der Umfangsrichtung derart angeordnet sind, daß jeder Abstand zwischen den Speichenpaaren (13₁; 13₂) größer ist als jeder Abstand zwischen den Speichen (14₁; 15₁; 14₂, 15₂), welche die Speichenpaare (13₁; 13₂) bilden,
wobei die Nabe (11₁; 11₂), die Felge (12₁; 12₂) und die Speichen (14₁, 15₁; 14₂, 15₂) integral ausgebildet sind, dadurch gekennzeichnet, daß eine Speiche (14₁; 14₂) des Paars von Speichen (14₁, 15₁; 14₂, 15₂) im wesentlichen mit einem U-förmigen Querschnitt ausgebildet ist, der zu einer Seite des Rads geöffnet ist, und die andere Speiche (15₁; 15₂) des Paars von Speichen (14₁, 15₁; 14₂, 15₂) im wesentlichen mit einem U-förmigen Querschnitt ausgebildet ist, der zu der anderen Seite des Rads geöffnet ist, und dadurch, daß jede der Speichen (14₁, 15₁; 14₂, 15₂) bezüglich der Radialrichtung der Nabe (11₁; 11₂) zu einer Seite in Umfangsrichtung geneigt ist, derart, daß die Speichen jedes Paars von Speichen in einer Dreiecksform angeordnet sind.

2. Gußrad nach Anspruch 1, wobei die Speichen (14₁, 15₁; 14₂, 15₂), welche jedes der Speichenpaare (13₁; 13₂) bilden, zwischen der Nabe (11₁; 11₂) und der Felge (12₁; 12₂) derart angeordnet sind, daß ein Abstand zwischen den Speichen (14₁, 15₁; 14₂, 15₂) bei Annäherung an die Nabe (11₁; 11₂) kleiner wird.

## Revendications

1. Roue coulée comprenant un moyeu (11₁; 11₂), une jante (12₁, 12₂) entourant coaxialement le moyeu (11₁; 11₂), et une pluralité de paires de rayons (13₁; 13₂) disposés entre ledit moyeu (11₁, 11₂) et ladite jante (12₁; 12₂), chaque paire de rayons (13₁; 13₂) étant composée d'une paire de rayons (14₁, 15₁; 14₂, 15₂) proches l'un de l'autre dans la direction de la circonférence dudit moyeu (11₁; 11₂) et de ladite jante (12₁; 12₂), ladite paire de rayons (13₁; 13₂) étant disposée à des intervalles égaux le long de ladite direction de la circonférence de telle manière que chaque intervalle entre lesdites paires de rayons (13₁; 13₂) soit plus grand que chaque intervalle entre lesdits rayons (14₁, 15₁; 14₂, 15₂) formant lesdites paires de rayons (13₁; 13₂), ledit moyeu (11₁, 11₂), ladite jante (12₁; 12₂) et lesdits rayons (14₁, 15₁; 14₂, 15₂) étant formés d'une seule pièce,
caractérisée en ce que
un rayon (14₁; 14₂) de la paire de rayons (14₁, 15₁; 14₂, 15₂) est formé sensiblement avec une section transversale en U d'un côté de la roue et l'autre rayon (15₁; 15₂) est formé sensiblement avec une section transversale en U de l'autre côté de la roue,
et en ce que chacun desdits rayons (14₁, 15₁; 14₂, 15₂) est incliné vers un côté dans la direction de la circonférence par rapport à la direction radiale du moyeu (11₁; 11₂) de telle manière que les rayons de chaque paire de rayons soient disposés en forme de triangle.

2. Roue coulée selon la revendication 1, dans laquelle lesdits rayons (14₁, 15₁; 14₂, 15₂) formant chacune desdites paires de rayons (13₁; 13₂) sont disposés entre ledit moyeu (11₁, 11₂) et ladite jante (12₁, 12₂) de telle manière qu'un intervalle entre lesdits rayons (14₁, 15₁; 14₂, 15₂) devienne plus petit en se rapprochant dudit moyeu (11₁, 11₂).
